# EUROPEAN PATENT SPECIFICATION

(11) **EP 2 097 660 B1**
(45) Date of publication and mention of the grant of the patent: **07.05.2014**
(21) Application number: 07852178.8
(22) Date of filing: 28.11.2007
(51) Int. Cl.: F16H 48/24

(54) **AN OPERATING DEVICE FOR A DIFFERENTIAL LOCK IN A VEHICLE**
BETÄTIGUNGSVORRICHTUNG FÜR EINE DIFFERENTIALSPERRE IN EINEM FAHRZEUG
DISPOSITIF D'ACTIONNEMENT POUR BLOCAGE DE DIFFÉRENTIEL DANS UN VÉHICULE

(30) Priority: 13.12.2006 SE 0602686
(43) Date of publication of application: 09.09.2009
(73) Proprietor: Scania CV AB (PUBL), 151 87 Södertälje (SE)
(72) Inventor: MEIJER, Lars, 15531 Nykvarn (SE)
(74) Representative: Sjögren Paulsson, Stina
(86) International application number: PCT/SE2007/050906
(87) International publication number: WO 2008/073032

(56) References cited:
- EP-A1- 0 293 653
- DE-U1- 8 700 373
- US-A- 2 620 055
- US-A- 5 342 255
- US-A- 5 947 252
- US-A- 5 947 252
- US-B1- 6 389 919
- US-B1- 6 432 020

## Description

### Technical field

The present invention relates to an operating device for a differential lock in a vehicle according to the preamble of claim 1.

### Background

Vehicles usually have a differential gear between two powered wheels. The differential gear makes it possible for the powered wheels to run at different speeds, e.g. when negotiating a bend, while at the same time the differential gear distributes driving power equally to both of the powered wheels. On vehicles with more than two powered wheels, there may also be a differential gear on each driveshaft between the forward and rear driveshafts. When travelling, for example, off road or on surfaces which are in slippery places, it is desirable to be able to reduce or totally eliminate the differential effect so that one powered wheel on a driveshaft will not slip and the other powered wheel on the same driveshaft will cease to apply its power. The differential effect of a differential gear can be reduced or totally eliminated with a differential lock. On heavy vehicles, e.g. trucks, the differential gear usually has a differential lock by means of which the powered wheels on a driveshaft, and possibly also a plurality of powered wheels on more than one driveshaft, e.g. in a four-wheel drive system, can be locked relative to one another. When the differential lock is engaged, it is easier to cope with off-road or slippery road conditions, since the two powered wheels will run at the same speed even if one of them ceases to engage with the running surface. Differential lock engagement does mean, however, that the vehicle will greatly understeer as compared with when the differential lock is disengaged, particularly on good running surfaces. The differential lock is usually an axial toothed connection in which the engagement movement is effected by means of compressed air and the disengagement movement is usually by means of compressed air or return spring force. A differential lock in the form of an axial toothed connection usually comprises a separate connecting means with teeth which engage with/are disengaged from teeth arranged on a differential housing whereby a mechanically firm connection is made/broken in the vehicle's differential gear between powered wheels situated on the same driveshaft but each on their respective side of the vehicle, this being achieved by the driving shafts of these wheels being locked relative to/disconnected from one another in a rotational direction. This is effected by the connecting means being movable relative to the driving shaft on one side in its axial direction but fixed in its rotational direction, while at the same time the differential housing is fixed relative to the driving shaft on the other side in its axial direction. The separate connecting means is moved into/out of engagement with the differential housing by means of an operating fork which is often a forging.

A problem with a differential gear with a differential lock as above is that during servicing work which involves removal of the driving shaft on which the separate connecting means is arranged, or during the fitting of this shaft in the course of manufacturing the vehicle, the separate connecting means has to be locked firmly in the operating fork by one or more screws or rivets before said driving shaft is removed/fitted, in order to avoid the separate connecting means being moved out of the operating fork. If the separate connecting means loses contact with the operating fork, this may in the worst case lead to having to remove parts of the gear housing in order to be able to put the connecting means back in a correct position relative to the operating fork.

US 2,620,055 describes an operating device for a differential lock for a vehicle, which operating device comprises two arc-shaped parts that are screwed and clamped onto the connection means.

DE 87 00 373 U1 describes an operating device for a differential lock for of a vehicle according to the preamble part of claim 1.

Brief description of the invention

It is problem of the prior art that the separate first connecting means has to be locked firmly in the operating fork by one or more screws or rivets before the driving shaft, on which the separate connecting means is arranged, is removed or fitted, in order to prevent the separate connecting means from being moved out of the operating fork.

This problem is solved according to the invention by an operating device according to claim 1. The operating device according to claim 1 has the characteristic of the differential lock being engaged by a mechanically firm connection which is effected between the two connecting means such that they are brought into engagement with one another by means of the operating fork.

### Brief description of the drawings

The invention is described below in more detail with reference to the attached drawings, in which:
Figure 1 depicts schematically a gear housing with a differential gear and an operating device for a differential lock in a vehicle according to a first embodiment of the invention.
Figure 2 depicts schematically an operating device for a differential lock according to a first embodiment of the invention, /
Figure 3 depicts schematically a cross-section of an operating fork and a connecting means of an operating device for a differential lock according to a first embodiment of the invention,
Figure 4 depicts schematically a cross-section of an operating fork and a connecting means of an operating device for a differential lock according to Figure 3, and Figure 5 depicts schematically a cross-section of an operating fork and a connecting means of an operating device for a differential lock according to Figure 2.

### Description of preferred embodiments

Similar parts in the various drawings are denoted by the same reference designations.

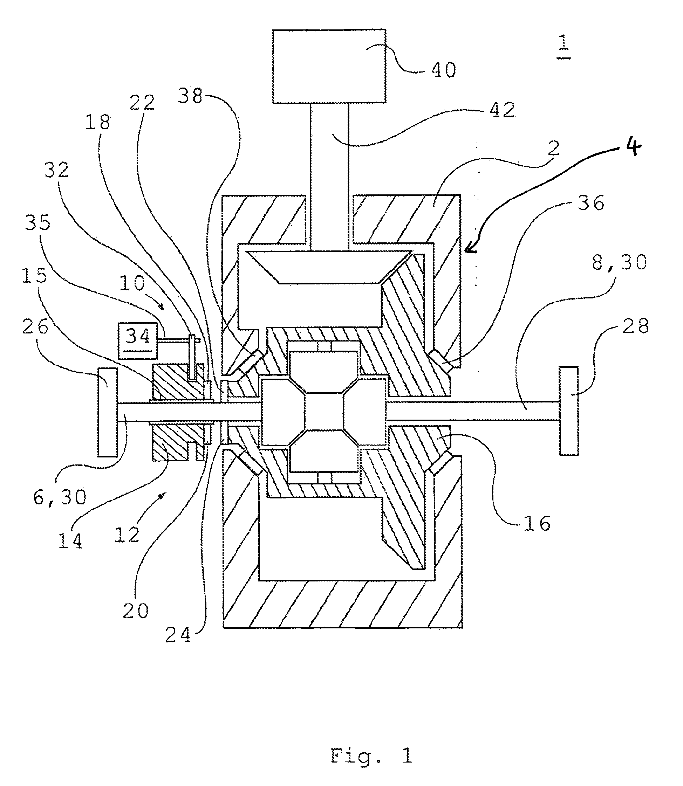

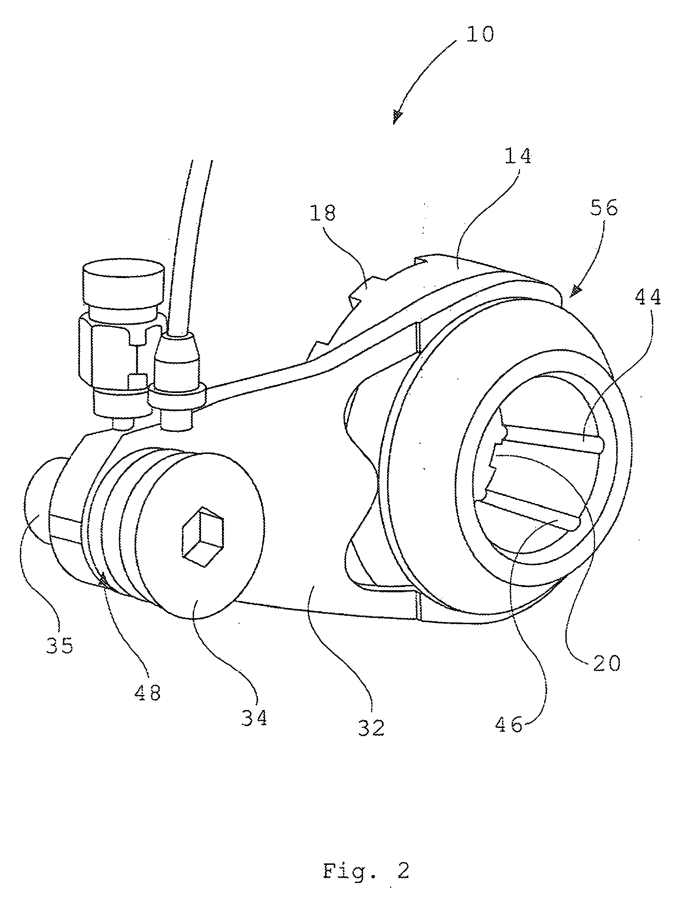

Figure 1 depicts schematically a gear housing 2 in a vehicle 1 with a differential gear 4 with two driving shafts 6, 8 and an operating device 10 for a differential lock 12 according to a first embodiment of the invention, in which the differential lock operating device 10 comprises a separate connecting means 14 which is movable relative to one driving shaft 6 in its axial direction but fixed in its rotational direction by a mechanical connection 15, e.g. a splined connection, and a second connecting means 16 which is fixed relative to the second driving shaft 8 in its axial direction. The separate connecting means 14 is provided with teeth 18, 20 which are adapted to engaging with/being disengaged from teeth 22, 24 arranged on the second connecting means 16 whereby a mechanical firm connection is made/broken in the differential gear 4 of the vehicle 1 between the powered wheels 26, 28 situated on the same driveshaft 30, which driveshaft 30 comprises two driving shafts 6, 8, each on their respective side of the vehicle, this being achieved by these driving shafts 6, 8 of the powered wheels 26, 28 being locked relative to/disengaged from one another in a rotational direction. The separate connecting means 14 is moved into/disengaged from the second connecting means 16 by means of an operating fork 32 whose engagement movement is preferably controlled by a cylinder 34 which is preferably a pneumatic cylinder. The disengagement movement of the operating fork 32 may be effected by the cylinder 34 or by spring force (not depicted). The second connecting means 16 is preferably the differential housing 16 of the differential gear 4, which housing is supported for rotation by bearings 36, 38 in the gear housing 2 in a conventional manner. The drawing also shows the input driveshaft 42 to the gear housing 2 from the engine 40 of the vehicle 1. For reasons of space, the whole or portions of the aforesaid operating cylinder 34 may be situated outside the gear housing 2. Figure 2 depicts schematically an operating device 10 for a differential lock 4 according to a first embodiment of the invention and shows the separate connecting means 14 with teeth 18, 20 and internal grooves 44, 46 for fixing the separate connecting means 14 to one driving shaft 6 by mechanical connection. The drawing also shows the operating fork 32 and a fastening 48 of the piston 35 of the operating cylinder 34, which fastening is preferably in a recess in the operating fork 32. The operating fork 32 is adapted to fitting in a groove 56 of the separate connecting means 14.

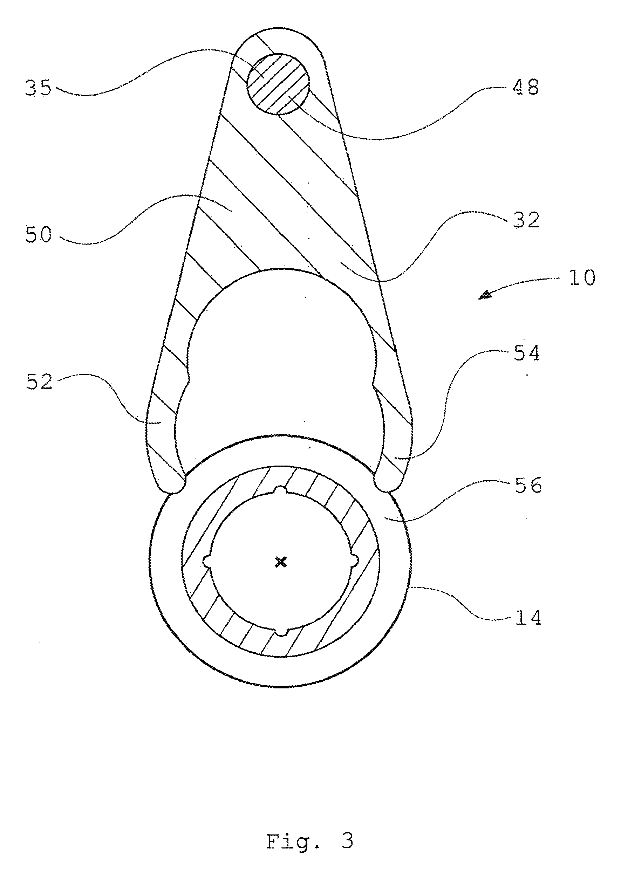

Figure 3 depicts schematically a cross-section of an operating fork 32 and a separate connecting means 14 of an operating device 10 for a differential lock according to a first embodiment of the invention, in which the operating fork 32 comprises a body 50 with a fastening 48, preferably a recess, for a piston 35 of an operating cylinder, and two limbs 52, 54 which are adapted to fitting in a groove 56 of the separate connecting means 14.

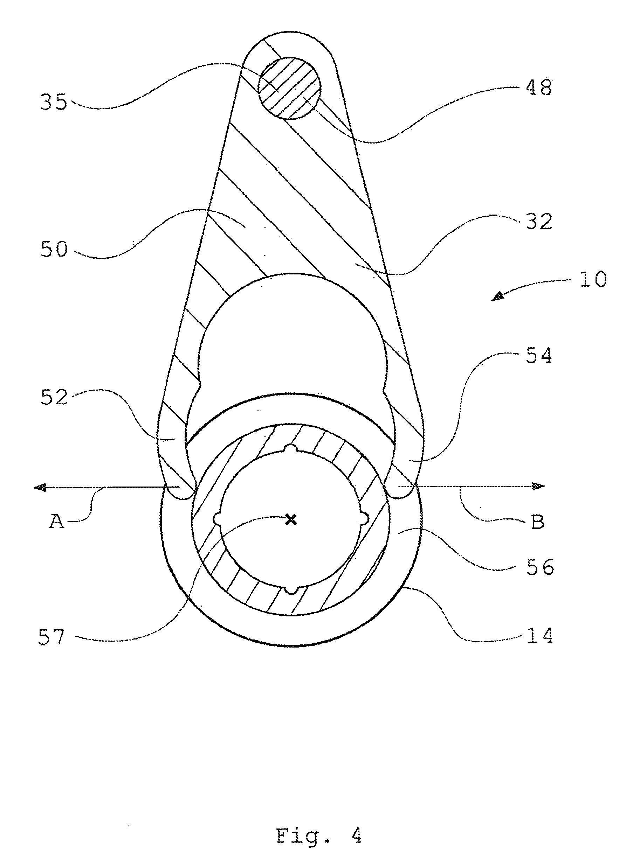

Figure 4 depicts schematically a cross-section of an operating fork 32 and a separate connecting means 14 of an operating device 10 for a differential lock according to Figure 3, wherein the operating fork 32 comprises a body 50 with a fastening 48, preferably a recess, for a piston 35 of an operating cylinder 34, and two limbs 52, 54 which are adapted to fitting in a groove 56 of the separate connecting means 14, and wherein it may be seen that when the separate connecting means 14 and the operating fork 32 are fitted together the limbs 52, 54 of the operating fork 32 will spring outwards in the respective directions of the arrows A and B when the limbs 52, 54 of the operating fork 32 pass the cross-sectional centre 57 of the connecting means 14.

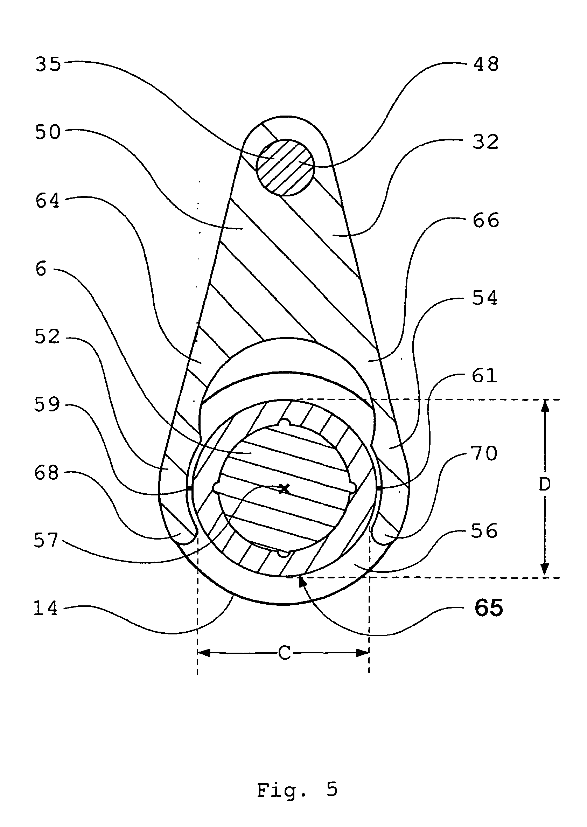

Figure 5 depicts schematically a cross-section of a operating fork and a separate connecting means 14 of an operating device 10 for a differential lock according to Figure 2, wherein the operating fork 32 comprises a body 50 with a fastening 48, preferably a recess, for a piston 35 of an operating cylinder, and two limbs 52, 54 which are adapted to fitting in a groove 56 of the separate connecting means 14, and wherein it may be seen that when the separate connecting means 14 and the operating fork 32 are fitted together so that the limbs 52, 54 of the operating fork 32 pass the cross-sectional centre 57 of the separate connecting means 14 and the limbs 52, 54 of the operating fork 32 will spring back inwards to their original state depicted in Figure 3. As illustrated in Figure 5, the operating fork 32 is arranged with radial clearance 59, 61 in the groove 56 of the separate connecting means 14 during operation, in order to prevent unnecessary wear of the operating fork 32 and the separate connecting means 14 respectively when the separate connecting means 14 rotates with the driving shaft 6. This can be achieved with, for example, a guide or protrusion in the gear housing. The aforesaid spring effect of the limbs 52, 54 of the operating fork 32 will retain the separate connecting means 14 even if the driving shaft 6 is removed from the separate connecting means 14. Thus the operating fork 32 comprises a body 50 which has extending from it two limbs 52, 54 which have their proximal ends 64, 66 connected with one another via the body 50 and their distal ends 68, 70 bent inwards towards one another so that these distal ends 68, 70 are arranged at a distance C from one another which is smaller than diameter D of the portion of the separate connecting means 14 which is bounded by the bottom surface 64 of the groove 56 arranged in the separate connecting means 14. The recess between the body 50 of the operating fork 32 and the latter' s limbs 52, 54 is so small that the connecting means 14 will not fall out of the operating fork 32 when the driving shaft 6 is removed.

## Claims

1. An operating device (10) or a differential lock in a vehicle (1), wherein the operating device (10) comprises a separate first connecting means (14), which is movable relative to a first driving shaft (6) in its axial direction but fixed in its rotational direction, and a second connecting means (16), which is fixed relative to a second driving shaft (8) in its axial direction, and wherein the differential lock is engaged by a mechanically firm connection being effected between the two connecting means (14, 16) by moving the first connecting means (14) into engagement with the second connecting means (16) by means of an operating fork (32), which has a body (50) and two limbs (52, 54) adapted to fitting in a groove (56) of the first connecting means (14),
the proximal ends (64, 66) of the limbs (52, 54), which proximal ends (64, 66) are proximal in regard to said body (50), are connected to one another via said body (50) and that the distal ends (68, 70) of the limbs (52, 54), which distal ends (68, 70) are distal in regard to said body (50), are bent inwards towards one another, **characterised in that** distal ends (68, 70) of the limbs (52, 54) are arranged at a distance (C) from one another, which distance (C) is smaller than the cross-sectional diameter (D) of the portion of said first connecting means (14) which is bounded by a bottom surface (65) of said groove (56) in which the first connecting means (14) is retained in the operating fork (32) by the limbs (52, 54), such that limbs (52, 54) of the operating fork (32) spring outwards when they pass the cross-sectional centre (57) of said first connecting means (14).

2. The operating device (10) according to claim 1, **characterised in that** a mechanically firm connection is effected between the two connecting means (14, 16) by the first connecting means (14) being provided with teeth (18, 20) which are adapted to engaging with teeth (22, 24) arranged on the second connecting means (16).

3. The operating device (10) according to claim 1 or 2, **characterised in that** a cylinder (34) is arranged to control the engagement movement of the operating fork (32).

4. The operating device (10) according to claim 3, **characterised in that** a fastening (48) for a piston (35) of the cylinder (34) is arranged in the body (50) of the operating fork (32).

5. The operating device (10) according to any one of the foregoing claims, **characterised in that** the second connecting means (16) is the differential housing (16) of the differential gear.

6. The operating device (10) according to any one of the foregoing claims, **characterised in that** the first connecting means (14) is provided with internal grooves (44, 46) for fixing the first connecting means (14) to the first driving shaft (6) in its rotational direction.

7. The operating device (10) according to any one of the foregoing claims, **characterised in that** the operating fork (32) is arranged with radial clearance (59, 61) in the groove (56) of the first connecting means (14) during operation, in order to prevent unnecessary wear of the operating fork (32) and the first connecting means (14) respectively when the first connecting means (14) rotates with the first driving shaft (6).

## Patentansprüche

1. Betätigungsvorrichtung (10) für eine Differenzialsperre in einem Fahrzeug (1), wobei die Betätigungsvorrichtung (10) ein separates erstes Verbindungsmittel (14), welches relativ zu einer ersten Antriebswelle (6) in seiner Axialrichtung beweglich aber in seiner Drehrichtung fixiert ist, und ein zweites Verbindungsmittel (16) umfasst, welches in seiner Axialrichtung relativ zu einer zweiten Antriebswelle (8) fixiert ist, und wobei die Differenzialsperre über eine mechanisch starre Verbindung eingelegt wird, welche zwischen den beiden Verbindungsmitteln (14, 16) durch Bewegen des ersten Verbindungsmittels (14) in Eingriff mit dem zweiten Verbindungsmittel (16) mittels einer Betätigungsgabel (32) bewirkt wird, welche einen Körper (50) und zwei zum Passen in eine Nut (56) des ersten Verbindungsmittels (14) eingerichtete Schenkel (52, 54) aufweist,
wobei die proximalen Enden (64, 66) der Schenkel (52, 54) miteinander über den Körper (50) verbunden sind, wobei die proximalen Enden (64, 66) proximal bezüglich des Körpers (50) angeordnet sind, und die distalen Enden (68, 70) der Schenkel (52, 54) einwärts zueinander gebogen sind, wobei die distalen Enden (68, 70) distal bezüglich des Körpers (50) sind,
**dadurch gekennzeichnet, dass** die distalen Enden (68, 70) der Schenkel (52, 54) in einem Abstand (C) zueinander angeordnet sind, wobei der Abstand (C) kleiner ist als der Querschnittsdurchmesser (D) desjenigen Abschnitts des ersten Verbindungsmittels (14), der von einer unteren Oberfläche (65) der Nut (56) begrenzt ist, in der das erste Verbindungsmittel (14) in der Betätigungsgabel (32) mittels der Schenkel (52, 54) aufgenommen ist, sodass die Schenkel (52, 54) der Betätigungsgabel (32) auswärts federn, wenn sie die Querschnittsmitte (57) des ersten Verbindungsmittels (14) passieren.

2. Betätigungsvorrichtung (10) nach Anspruch 1,
**dadurch gekennzeichnet, dass** zwischen den beiden Verbindungsmitteln (14, 16) eine mechanisch starre Verbindung dadurch bewirkt ist, dass an dem ersten Verbindungsmittel (14) Zähne (18, 20) vorgesehen sind, die dazu eingerichtet sind, in am zweiten Verbindungsmittel (16) angeordnete Zähne (22, 24) einzugreifen.

3. Betätigungsvorrichtung (10) nach Anspruch 1 oder 2,
**dadurch gekennzeichnet, dass** ein Zylinder (34) dazu angeordnet ist, die Eingriffsbewegung der Betätigungsgabel (32) zu steuern.

4. Betätigungsvorrichtung (10) nach Anspruch 3,
**dadurch gekennzeichnet, dass** eine Befestigung (48) für einen Kolben (35) des Zylinders (34) in dem Körper (50) der Betätigungsgabel (32) angeordnet ist.

5. Betätigungsvorrichtung (10) nach einem der vorangehenden Ansprüche,
**dadurch gekennzeichnet, dass** das zweite Verbindungsmittel (16) das Differenzialgehäuse (16) des Differenzialgetriebes ist.

6. Betätigungsvorrichtung (10) nach einem der vorangehenden Ansprüche,
**dadurch gekennzeichnet, dass** an dem ersten Verbindungsmittel (14) innere Vertiefungen (44, 46) zum Fixieren des ersten Verbindungsmittels (14) an der ersten Antriebswelle (6) in seiner Drehrichtung vorgesehen sind.

7. Betätigungsvorrichtung (10) nach einem der vorangehenden Ansprüche,
**dadurch gekennzeichnet, dass** die Betätigungsgabel (32) während des Betriebs mit einem radialen Abstand (59, 61) in der Nut (56) des ersten Verbindungsmittels (14) angeordnet ist, um einen unnötigen Verschleiß der Betätigungsgabel (32) und des ersten Verbindungsmittels (14) jeweils zu vermeiden, wenn sich das erste Verbindungsmittel (14) mit der ersten Antriebswelle (6) dreht.

## Revendications

1. Dispositif de commande (10) pour un verrou de différentiel dans un véhicule (1), dans lequel le dispositif de commande (10) comprend un premier moyen de liaison séparé (14), qui peut se déplacer par rapport à un premier arbre d'entraînement (6) dans sa direction axiale mais qui est immobilisé dans la direction de sa rotation ; et un second moyen de liaison (16), qui est fixe par rapport à un second arbre d'entraînement (8) dans sa direction axiale, et dans lequel le verrou de différentiel est engagé par une liaison mécaniquement rigide établie entre les deux moyens de liaison (14, 16), réalisée par le déplacement du premier moyen de liaison (14) en prise avec le second moyen de liaison (16) au moyen d'une fourchette de commande (32) qui comprend un corps (50) et deux branches (52, 54) aptes à s'emboîter dans une gorge (56) du premier moyen de liaison (14),
les extrémités proximales (64, 66) des branches (52, 54), lesquelles extrémités proximales (64, 66) sont proximales par rapport audit corps (50), étant reliées l'une à l'autre par l'intermédiaire dudit corps (50) et les extrémités distales (68, 70) des branches (52; 54), lesquelles extrémités distales (58, 70) sont distales par rapport audit corps (50), étant recourbées vers l'intérieur, l'une vers l'autre,
**caractérisé en ce que** les extrémités distales (68, 70) des branches (52, 54) sont disposées à une distance (C) l'une de l'autre, laquelle distance (C) est inférieure au diamètre de la section transversale (D) de la partie dudit premier moyen de liaison (14) qui est limitée par une surface de fond (65) de ladite gorge (56) dans laquelle le premier moyen de liaison (14) est retenu dans la fourchette de commande (32) par les branches (52, 54) de telle sorte que les branches (52, 54) de la fourchette de commande (32) s'écartent élastiquement vers l'extérieur lorsqu'elles franchissent le centre de la section (57) dudit premier moyen de liaison (14).

2. Dispositif de commande (10) selon la revendication 1, **caractérisé en ce qu'**une liaison mécaniquement rigide est réalisée entre les deux moyens de liaison (14, 16) par le fait que le premier moyen de liaison (14) est muni de dents (18, 20) qui sont aptes à engrener avec des dents (22, 24) prévues sur le second moyen de liaison (16).

3. Dispositif de commande (10) selon la revendication 1 ou 2, **caractérisé en ce qu'**un vérin (34) est agencé pour contrôler le mouvement d'engagement de la fourchette de commande (32).

4. Dispositif de commande (10) selon la revendication 3, **caractérisé en ce qu'**une fixation (48) pour un piston (35) du vérin (34) est agencée dans le corps (50) de la fourchette de commande (32)

5. Dispositif de commande (10) selon une quelconque des revendications précédentes, **caractérisé en ce que** le second moyen de liaison (16) est le carter de différentiel (16) du mécanisme de différentiel.

6. Dispositif de commande (10) selon une quelconque des revendications précédentes, **caractérisé en ce que** le premier moyen de liaison (14) est muni de gorges intérieures (44, 46) servant à fixer le premier moyen de liaison (14) au premier arbre d'entraînement (6) dans la direction de sa rotation.

7. Dispositif de commande (10) selon une quelconque des revendications précédentes, **caractérisé en ce que** la fourchette de commande (32) est disposée avec du jeu radial (59, 61) dans la gorge (56) du premier moyen de liaison (14) pendant le fonctionnement, de manière à éviter l'usure inutile de la fourchette de commande (32) et du premier moyen de liaison (14) respectivement lorsque le premier moyen de liaison (14) tourne avec le premier arbre d'entraînement (6).
